## Europäisches Patentamt
## European Patent Office
## Office européen des brevets

(19)

(11) Veröffentlichungsnummer: **0 135 680**
**B1**

(12) **EUROPÄISCHE PATENTSCHRIFT**

(45) Veröffentlichungstag der Patentschrift:
31.05.89

(51) Int. Cl.⁴: **F 02 D 43/00**

(21) Anmeldenummer: **84107303.4**

(22) Anmeldetag: **26.06.84**

(54) **Elektronische Steuer- und/oder Regelvorrichtung für eine Brennkraftmaschine.**

(30) Priorität: 16.07.83 DE 3325760
12.12.83 DE 3344821

(43) Veröffentlichungstag der Anmeldung:
03.04.85 Patentblatt 85/14

(45) Bekanntmachung des Hinweises auf die Patenterteilung:
31.05.89 Patentblatt 89/22

(84) Benannte Vertragsstaaten:
DE FR GB IT

(56) Entgegenhaltungen:
EP-A-0 065 221
FR-A-2 534 708
GB-A-2 035 633
GB-A-2 120 811
JP-A-58 101 244

PATENTS ABSTRACTS OF JAPAN, Band 7, Nr. 203
(M-241) 1348 , 8. September 1983; & JP-A-58 101 244
(TOYOTA JIDOSHA KOGYO K.K.) 16.06.1983 (Kat. X)

(73) Patentinhaber: **ROBERT BOSCH GMBH, Postfach
50, D-7000 Stuttgart 1 (DE)**

(72) Erfinder: **Bonitz, Jörg, Dipl.- Ing., Marsstrasse 19,
D-7130 Mühlacker 6 (DE)**
Erfinder: **Decker, Heinz, Dipl.- Ing., In der Seite
10, D-7143 Vaihingen 8 (DE)**
Erfinder: **Entenmann, Robert, Ing. grad.,
Beihingerweg 15, D-7141 Benningen (DE)**
Erfinder: **Mayer, Ulrich, Dr. Dipl.- Phys.,
Fuggerstrasse 27, D-7050 Waiblingen (DE)**
Erfinder: **Miller, Bernard, Lehenstrasse 31, D-7000
Stuttgart 1 (DE)**
Erfinder: **Rohde, Siegfried, Dr.- Ing., Memelweg 1,
D-7141 Schwieberdingen (DE)**
Erfinder: **Schleupen, Richard, Dipl.- Ing., Gottlob-
Ansel- Strasse 6, D-7121 Ingersheim (DE)**
Erfinder: **Unland, Stephan, Dipl.- Ing.,
Reichertshalde 96, D-7140 Ludwigsburg (DE)**
Erfinder: **Viess, Walter, Dipl.- Ing., Memelweg 1,
D-7141 Schwieberdingen (DE)**

## Beschreibung

### Stand der Technik

Die Erfindung betrifft eine elektronische Steuer- und/oder Regelvorrichtung für eine Brennkraftmaschine nach der Gattung des Hauptanspruchs. Zur Steuerung beispielsweise der Zünd- oder Kraftstoffeinspritzvorgänge duch eine solche Steuervorrichtung wird neben einer Drehzahlinformation auch eine Lastinformation benötigt. Zur Erfassung der Last werden dabei vorzugsweise Unterdrucksensoren oder Luftmengenmesser im Ansaugrohr der Brennkraftmaschine verwendet. Die gleichen Informationen werden auch beispielsweise für eine (Turbo-) Ladedrucksteuerung oder -regelung zur Erzeugung des Sollwerts benötigt. Tritt am Lastgeber ein Defekt auf, so besteht die Gefahr, daß unerwünschte Betriebszustände, wie z. B. klopfende Verbrennung, Überhitzung, hoher Kraftstoffverbrauch usw. auftreten. Um dies zu verhindern muß ein Defekt des Lastsensors eindeutig erkannt werden und außerdem gewährleistet sein, daß die Brennkraftmaschine immer in unkritischem Betriebszustand gehalten wird.

Möglichkeiten zur Erkennung von Lastsensordefekten zeigen die Schriften EP-A-0 065 221 oder die JP-A-58 101 244. In diesen Schriften werden elektronische Steuer- und/oder Regelvorrichtungen für Brennkraftmaschinen beschrieben, bei denen wenigstens ein Lastsignal und ein Drehzahlsignal erfaßt und zu wenistens einem Steuersignal verarbeitet werden.

Zusätzlich zum Lastsignal wird noch ein weiteres Signal erfaßt und mit dem Lastsignal verglichen. Ab einer gewissen Differenz der Signale wird ein Sensordefekt erkannt und eine Sicherheitseinrichtung aktiviert, durch die das Steuersignal so verändert wird, daß die Brennkraftmaschine in einem unschädlichen Betriebszustand betrieben wird.

Da beim Start der Brennkraftmaschine zunächst der Lastzustand nicht präzise festgelegt werden kann, kann die Brennkraftmaschine bei Steuer- und/oder Regelvorrichtungen gemäß oben genannten Schriften im Startfall in einen schädlichen Betriebszustand gelangen.

.Durch die in den Unteransprüchen aufgeführten Maßnahmen sind vorteilhafte Weiterbildungen und Verbesserungen der im Hauptanspruch angegebenen Vorrichtung möglich. Eine besonders einfache Lösung ergibt sich durch Erfassung des zweiten Lastsignals mittels eines Drosselklappenendschalters in Verbindung mit der ohnehin vorhandenen Drehzahlinformation. Wird das Lastsignal durch einen Drucksensor geliefert, so läßt sich ein besonders einfacher Vergleich mit einem Signal bilden, das eine Funktion des Atmosphärendruckes ist. Daß ab eines bestimmten vorgegebenen Druckes im Ansaugrohr das Steuersignal freigegeben wird, hat den Vorteil, daß eine irrtümliche Erkennung von Lastsensordefekten wieder rückgängig gemacht wird.

### Zeichnung

Zwei Ausführungsbeispiele der Erfindung sind in der Zeichnung dargestellt und in der nachfolgenden Beschreibung näher erläutert. Es zeigen Figur ein erstes Ausführungsbeispiel mit zwei Lastsensoren im Blockschaltbild und Figur 2 ein zweites Ausführungsbeispiel.

### Beschreibung der Ausführungsbeispiele

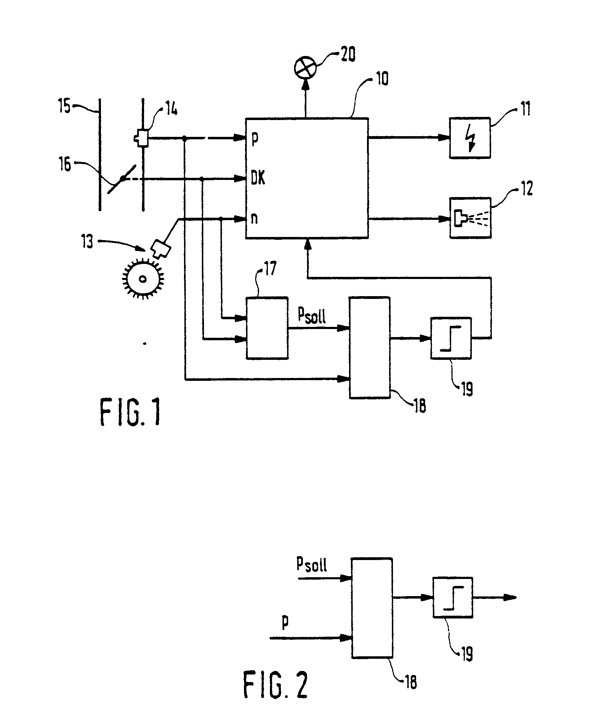

In Figur 1 steuert eine elektronische Steuervorrichtung 10, die vorzugsweise als Mikrorechner realisiert sein kann, wenigstens eine Zündungsendstufe 11 sowie Einspritzendstufen 12. Eingangsseitig sind der Steuervorrichtung 10 eine durch einen Drehzahlgeber 13 erzeugte Drehzahlinformation n sowie ein Lastsignal p zugeführt, das durch einen Unterdrucksensor 14 im Ansaugrohr 15 der Brennkraftmaschine erzeugt wird. Eine Drosselklappe 16 im Ansaugrohr erzeugt ein Drosselklappenwinkelsignal DK. Dies kann in einfachster Ausführung in bekannter Weise durch einen oder zwei Endschalter in den beiden Endstellungen der Drosselklappe oder auf exaktere Weise über ein Potentiometer erzeugt werden.

Das Drosselklappensignal DK sowie das Drehzahlsignal n sind einer Last-Sollwertstufe 17 zur Bildung eines Last-Sollwerts $P_{soll}$ zugeführt. Diese Last-Sollwertstufe 17 kann z. B. als ein in einem Speicher abgelegtes Kennfeld ausgebildet sein, wobei der jeweilige Speicherwert $p_{soll}$ durch die beiden Eingangsparameter DK und n angewählt werden kann. Wird die Stellung der Drosselklappe über ein Potentiometer erfaßt, so kann der Sollwert ständig gebildet werden, während bei einer Erfassung durch Endschalter eine Bildung und ein nachfolgender Vergleich jeweils nur in der Leerlauf- bzw. Vollaststellung möglich ist. In einer Vergleichsstufe 18 wird dieser Sollwert $p_{soll}$ mit dem erfaßten Lastwert p verglichen und eine eventuell auftretende Differenz einer nachgeschalteten Schwellwertstufe 19 zugeführt. Übersteigt die Differenz den eingestellten Schwellwert der Schwellwertstufe 19 so wird ein Defekt des Lastsensors 14 erkannt und ein entsprechendes Steuersignal an die Steuervorrichtung 10 abgegeben. Durch dieses Steuersignal werden geeignete Sicherheitsmaßnahmen durch eine Sicherheitseinrichtung zum Schutz der Brennkraftmaschine eingeleitet, wie z. B. Erzeugung eines Vollastzündwinkels, die Einschaltung einer Klopfregelung und/oder eine Vollastanreicherung über die Kraftstoffeinspritzsignale. Gleichzeitig wird eine z. B. als Warnleuchte ausgebildete Kontrolleinrichtung 20 eingeschaltet, die dem Fahrer den Defekt der Lasterfassung anzeigt.

Im Startfall ist das Steuersignal so eingestellt, daß ein geschützter Betriebszustand der Brennkraftmaschine auf jeden Fall gewährleistet ist. Erst ab eines bestimmten Druckes im Ansaugrohr bzw. Lastwertes p wird das Steuersignal freigegeben. Im Betriebsfall wird ab eines weiteren bestimmten Druckes die Sicherheitseinrichtung ausgeschaltet, und so eine irrtümliche Defektmeldung des Unterdrucksensors 14 verhindert.

Es sei noch festgehalten, daß zur Lasterfassung natürlich alternativ zum Unterdrucksensor 14 auch andere bekannte lastabhängige Größen herangezogen werden können, wie z. B. ein Drosselklappenpotentiometer, ein Vollast- und/oder Leerlaufschalter, ein Luftmengenmesser oder Kraftstoffeinspritzimpulse. Diese verschiedenen Möglichkeiten zur Lasterfassung können auch natürlich zur Erzeugung des zweiten, Referenzlastsignals herangezogen werden. Die einfachste Realisierung besteht jedoch in der Verbindung eines Unterdrucksensors 14 zur primären Lasterfassung und einem Drosselklappenendschalter zur Referenzlasterfassung (in Verbindung mit dem Drehzahlsignal), da diese Geber gewöhnlich ohnehin vorhanden sind.

Es sei weiterhin noch festgehalten, daß die Einhaltung der Sicherheitsmaßnahmen bei Erkennung eines Defekts auch graduell gestuft eingesetzt werden können, so z. B. die Verstellung des Zündwinkels nicht auf den Vollastwert, sondern die Verstellung um einen bestimmten Zündwinkel in Richtung spät.

Zur Vereinfachung der Darstellung ist in beiden Figuren nicht gezeigt, daß der Steuervorrichtung 10 eine Überwachungseinrichtung (Watch-Dog) zur Bildung von Rücksetzimpulsen im Fehlerfalle zugeordnet ist. Die Überwachungseinrichtung ist so ausgelegt, daß ein zu geringer Saugrohrdruck nur dann als Fehler erkannt wird, wenn die Drehzahl in der zähe der Startdrehzahl liegt. Hierdurch wird verhindert, daß eine Störung, die zu einem Rücksetzimpuls bei hoher Drehzahl führt, eine Defektanzeige der Lasterfassung auslöst.

## Patentansprüche

1. Elektronische Steuer- und/oder Regelvorrichtung für eine Brennkraftmaschine, bei der wenigstens ein erstes Last- und ein Drehzahlsignal erfaßt und zu wenigstens einem Steuersignal, insbesondere Zündsteuer- oder Einspritzsignal verarbeitet werden, bei der ein vom ersten Lastsignal unabhängiges, jedoch mit dem Lastzustand des Motors korreliertes zweites Signal erfaßt und mit dem Lastsignal verglichen wird, womit bei bestimmten Betriebszuständen ab einer vorgebbaren Abweichung voneinander ein Sensordefekt erkannt wird und eine Sicherheitseinrichtung einschaltbar ist, durch die das Steuersignal auf Werte veränderbar ist, die im wesentlichen für alle Betriebszustände der Brennkraftmaschine unschadlich sind, dadurch gekennzeichnet, daß das Steuersignal unmittelbar nach Einschalten der Vorrichtung auf Werte festgelegt ist, die im wesentlichen für alle Betriebszustände der Brennkraftmaschine unschädlich sind, und daß erst ab Erreichen einer vorgegebenen Schwelle des ersten Lastsignals, das vorzugsweise eine Funktion des Druckes eines Druckmessers (14) ist, das Steuersignal freigegeben wird.

2. Vorrichtung nach Anspruch 1, dadurch gekennzeichnet, daß das erste Lastsignal von einem Drucksensor (14) oder Luftmengenmesser im Ansaugrohr (15) der Brennkraftmaschine und das zweite, den Lastzustand charakterisierende Signal von einem Drosselklappenwinkelsensor oder einem Lastschalter oder aus Einspritzsteuersignalen erzeugt wird.

3. Vorrichtung nach Anspruch 1, dadurch gekennzeichnet, daß in einer Last-Sollwertstufe (17) das zweite, den Lastzustand charakterisierende Drosselklappenwinkelsignal (DK) mit einem Drehzahlsignal (n) zu einem Soll-Lastsignal verknüpft wird.

4. Vorrichtung nach einem der vorhergehenden Ansprüche, dadurch gekennzeichnet, daß der Drosselklappenwinkelsensor aus wenigstens einem Endschalter besteht.

5. Vorrichtung nach einem der vorangehenden Ansprüche, dadurch gekennzeichnet, daß ab einem vorgegebenen Druck die Sicherheitseinrichtung nicht mehr einschaltbar ist oder ausgeschaltet wird und das Steuersignal freigegeben wird.

6. Vorrichtung nach einem der vorhergehenden Ansprüche, dadurch gekennzeichnet, daß die Steuersignalwerte durch die Sicherheitseinrichtung in Richtung der Vollastwerte verändert werden.

7. Vorrichtung nach einem der vorhergehenden Ansprüche, dadurch gekennzeichnet, daß zur Veränderung der Steuersignalwerte auf unschädliche Werte eine Kopfregelung einschaltbar ist.

8. Vorrichtung nach einem der vorhergehenden Ansprüche, dadurch gekennzeichnet, daß bei Erkennung eines Defekts des Lastsensors (14) eine Warneinrichtung (20) einschaltbar ist.

9. Vorrichtung nach einem der vorhergehenden Ansprüche, dadurch gekennzeichnet, daß eine Überwachungseinrichtung zur Bildung von Rücksetzimpulsen im Fehlerfalle für die Vorrichtung vorgesehen ist.

10. Vorrichtung nach Anspruch 9, dadurch gekennzeichnet, daß nach einem Rücksetzimpuls das Drehzahlsignal erfaßt wird und daß oberhalb einer vorgegebenen Drehzahl die Warneinrichtung (20) abgeschaltet ist.

## Claims

1. Electronic control device for a combustion engine, in which at least a first load and a rotational-speed signal are detected and processed to form at least one control signal, particularly ignition control or injection signal, in which device a <u>second signal</u> which is independent of the first load signal <u>but is correlated with the load condition of the engine</u> is detected and compared with the load signal, by means of which action a sensor defect is detected above a predeterminable deviation from one another at certain operating conditions and a safety device can be switched on, by means of which the control signal can be changed to values which are essentially harmless for all operating conditions of the combustion engine, characterized in that, immediately after the device has been switched on, the control signal is set to values which are essentially harmless for all operating conditions of the combustion engine and that the control signal is enabled only after a predetermined threshold of the first load signal, which is preferably a function of the pressure of a pressure meter (14), has been reached.

2. Device according to Claim 1, characterized in that the first load signal is generated by a pressure sensor (14) or airflow meter in the intake tube (15) of the combustion engine and the second signal characterizing the load condition is generated by a throttle flap angle sensor or a load switch or from injection control signals.

3. Device according to Claim 1, characterized in that the second throttle flap angle signal (DK) characterizing the load condition is logically combined with a rotational-speed signal (n) to form a nominal load signal in a load setpoint value stage (17).

4. Device according to one of the preceding claims, characterized in that the throttle flap angle sensor consists of at least one limit switch.

5. Device according to one of the preceding claims, characterized in that, above a predetermined pressure, the safety device can no longer be switched on or is switched off and the control signal is enabled.

6. Device according to one of the preceding claims, characterized in that the control signal values are changed in the direction of the full-load values by the safety device.

7. Device according to one of the preceding claims, characterized in that a head control system can be switched on for changing the control signal values to harmless values.

8. Device according to one of the preceding claims, characterized in that a warning device (20) can be switched on when a defect of the load sensor (14) is detected.

9. Device according to one of the preceding claims, characterized in that a watch-dog facility for forming reset impulses in the event of a fault is provided for the device.

10. Device according to claim 9, characterized in that after a reset pulse, the rotational-speed signal is detected and that the warning device (20) is switched off above a predetermined rotational speed.

## Revendications

1. Dispositif électronique de commande et/ou de régulation d'un moteur à combustion interne dans lequel on détecte au moins un premier signal de charge et de vitesse de rotation pour former au moins un signal de commande notamment un signal de commande d'allumage ou d'injection, en détectant un second signal indépendant du premier signal de charge mais toutefois lié par corrélation à l'état de charge du moteur, et on le compare au signal de charge, on détecte pour des états de fonctionnement déterminés tout défaut de capteur lorsqu'il y a une différence par rapport à une valeur prédéterminée et on met en oeuvre un dispositif de sécurité qui modifie le signal de commande pour des grandeurs qui sont en principe inoffensives pour tous les états de fonctionnement du moteur à combustion interne, dispositif caractérisé en ce que le signal de commande est fixé à des grandeurs directement après la mise en oeuvre du dispositif, qui ne sont en principe pas gênantes quel que soit l'état de fonctionnement du moteur à combustion interne et en ce que seulement lorsqu'on atteint un seuil prédéterminé pour le premier signal de charge, seuil qui est de préférence une fonction de la pression d'un manomètre (14), on libère le signal de commande.

2. Dispositif selon la revendication 1, caractérisé en ce que le premier signal de charge est formé par un capteur de pression (14) ou débitmètre d'air dans la tubulure d'aspiration (15) du moteur à combustion interne et le second signal qui caractérise l'état de charge est formé par un capteur d'angle de papillon ou un commutateur de charge ou à partir des signaux de commande de l'injection.

3. Dispositif selon la revendication 1, caractérisé en ce que dans un étage de valeur de consigne de charge (17) on combine le second signal d'angle de papillon (DK) qui caractérisé l'état de charge à un signal de vitesse de rotation (n) pour former un signal de charge de consigne.

4. Dispositif selon l'une des revendications précédentes, caractérisé en ce que le capteur de l'angle du papillon se compose d'au moins un capteur de fin de course.

5. Dispositif selon l'une des revendications précédentes, caractérisé en ce qu'à partir d'une pression prédéterminée l'installation de sécurité ne peut plus être branchée ou débranchée et le signal de commande est libéré.

6. Dispositif selon l'une des revendications précédentes, caractérisé en ce que les valeurs des signaux de commande sont modifiées par l'installation de sécurité dans le sens des valeurs de pleine charge.

7. Dispositif selon l'une des revendications précédentes, caractérisé en ce que pour modifier les valeurs des signaux de commande sur des valeurs non nocives on passe sur une régulation de tête.

8. Dispositif selon l'une des revendications précédentes, caractérisé en ce que lors de la détection d'un défaut du capteur de charge (14) on met en oeuvre une installation d'avertissement (20).

9. Dispositif selon l'une des revendications précédentes, caractérisé par une installation de surveillance pour former des impulsions de remise à l'état initial en cas d'incident du dispositif.

10. Dispositif selon la revendication 4, caractérisé en ce qu'après une impulsion de remise à l'état initial, on détecte le signal de vitesse de rotation et en ce qu'au-delà d'une vitesse de rotation prédéterminée on coupe le dispositif d'avertissement (20).

FIG. 1

FIG. 2